# EUROPÄISCHE PATENTSCHRIFT

(11) **EP 1 527 504 B1**
(45) Veröffentlichungstag und Bekanntmachung des Hinweises auf die Patenterteilung: **12.08.2009**
(21) Anmeldenummer: 03722039.9
(22) Anmeldetag: 20.05.2003
(51) Int. Cl.: H02G 3/20, F21V 21/03

(54) **AKTORGEHÄUSE**
ACTUATOR HOUSING
BOITIER D'ACTIONNEUR

(30) Priorität: 23.07.2002 AT 11142002
(43) Veröffentlichungstag der Anmeldung: 04.05.2005
(73) Patentinhaber: Moeller Gebäudeautomation GmbH, 3943 Schrems (AT)
(72) Erfinder: ZÖCHLING, Martin, A-3873 Brand (AT)
(74) Vertreter: Gibler, Ferdinand
(86) Internationale Anmeldenummer: PCT/AT2003/000146
(87) Internationale Veröffentlichungsnummer: WO 2004/012315

(56) Entgegenhaltungen:
- EP-A- 0 473 042
- DE-U- 29 510 285
- US-A- 3 706 956

## Beschreibung

Die Erfindung betrifft ein Funkbus-Gerät, beispielsweise einen Aktor zur Bedienung bzw.

Steuerung eines elektrischen Verbrauchers einer elektrischen Anlage, dessen Gehäuse im wesentlichen zylindrische Gestalt aufweist, wobei vorzugsweise die Höhe des Zylinders kleiner oder gleich dem Zylinderdurchmesser ist.

Solche bekannte Funkbus-Gerät werden bei der Hausinstallation z.B. in Unterputzdosen plaziert. Nachteilig bei den bekannten Funkbus-Geräten ist die allgemein schwierige Platzierung in einer Unterputzdose, da zufolge der Anschlußdrähte und der Leitungsführungen nur noch wenig Platz zur Verfügung steht.

Aus der US-A-3 706 956 ist eine Vorrichtung aus im wesentlichen zwei Bauteilen bekannt geworden, wobei der dort beschriebene zylindrische Bauteil mit Schlitzausführung fix an der Decke montiert wird. Dieser Bauteil stellt eine sowohl elektrische Verbindung zwischen Deckenauslass und elektrischem Gerät (Luster, Deckenventilator und dergl.) als auch eine mechanische Verbindung zwischen Decke und den entsprechenden Geräten dar. Der andere Bauteil ist fix am oberen Ende des elektrischen Gerätes angebracht und ist derart ausgeführt, dass er in ersteren, zylindrischen Bauteil seitlich eingeführt werden kann, um so eine leicht lösbare gleichzeitig mechanische und elektrische Verbindung zu ermöglichen. Die Unterbringung eines Funkbus-Geräts in dieser Vorrichtung ist jedoch nicht vorgesehen. Werden diese bekannten Funkbus-Geräte bei Deckenauslässen verwendet, so ist eine verdeckte Anbringung derselben nur in gesonderten Putzdosen möglich.

Aufgabe der vorliegenden Erfindung ist es daher, ein Funkbus-Gerät der eingangs erwähnten Bauart anzugeben, mit dem diese Nachteile vermieden werden.

Erfindungsgemäß wird dies dadurch erreicht, daß das Gehäuse mit einer sich von der Mantelfläche des Zylinders in Richtung der Längssymmetrieachse des Zylinders, vorzugsweise bis zu dieser, erstreckenden, in Längsrichtung durchgehenden Ausnehmung ausgebildet ist.

Erfolgt die Anordnung des Gehäuses in einer Putzdose, so ermöglicht die nach außen offene durchgehende Ausnehmung des Gehäuses eine bequeme Unterbringung und Führung der Anschlußdrähte und Leitungszuführungen. Wird das Gehäuse bei einem Deckenauslaß z.B. für die Steuerung einer Leuchte oder eines Lusters zum Einsatz gebracht, so kann die Leuchten-/Lusterhalterung, z.B. eine Schnur, eine Kette oder Stange, durch die Ausnehmung des Gehäuses hindurch geführt werden und insbesondere dann, wenn die Ausnehmung bis zur Längssymmetrieachse des Zylinders reicht, zentrisch um die Stange bzw. Kette angeordnet werden und das Gehäuse von einer Abdeckung, z. B. der Lusterkappe, direkt abgedeckt und somit eine verdeckte Montage des Gehäuses erzielt werden. Aber auch in dem Falle, daß der

Deckenauslaß, z.B. in einer Putzdose mündet, kann zufolge der Ausnehmung des Gehäuses die Leuchten-/Lusterhalterung mittig durch das Gehäuse geführt werden, gleichzeitig können aber auch die Anschlußdrähte, die Antenne und die Leitungszuführungen in dieser Dose bequem positioniert und untergebracht werden.

Die Erfindung erweist sich insbesondere bei Renovierungen in alten Gebäuden als nützlich: Das erfindungsgemäße Gerät kann auf bestehende Lampen und Luster montiert werden, ohne daß diese Lampen und Luster bzw. ihre Lusterhaken demontiert werden müssen.

Vorzugsweise ist die Ausnehmung gemäß Anspruch 2 in Form eines Schlitzes ausgebildet, da sich dadurch eine einfache Fertigung des Aktorgehäuses ergibt.

Um eine Montage des Gehäuses an einer Leuchten-/Lusterhalterung in einfacher Art und

Weise zu ermöglichen, kann die Ausnehmung gemäß Anspruch 3 zumindest bereichsweise als Klemmverbinder ausgebildet sein.

Um nach der Montage des Gehäuses an einer Leuchten-/Lusterhalterung in einfacher Art die elektrische Installation zu ermöglichen, können die elektrischen Anschlüsse in Weiterbildung der Erfindung an dem der Ausnehmung gegenüberliegenden Bereich der Zylindermantelfläche des Aktorgehäuses herausgeführt sein.

Weiters kann vorgesehen sein, daß der Zylindermantel mit sich in Zylinderlängsriclitung erstreckenden ebenen Flächen ausgebildet ist.

Diese Flächen können zur Anlage an entsprechende Gegenflächen, die im Inneren einer Installationsdose angeordnet sind, gebracht werden, womit eine Verdrehung des Gehäuses vermieden wird. Davon abgesehen entsteht durch die ebenen Flächen zwischen der Innenwandung der Installationsdose und dem Gehäuse ein Stauraum, in welchem Klemmen und/oder Installationsdrähte untergebracht werden können.

Die Erfindung wird nachstehend unter Bezugnahme auf die beigeschlossenen Zeichnungen, in welchen Ausführungsformen dargestellt sind, näher beschrieben. Dabei zeigt:

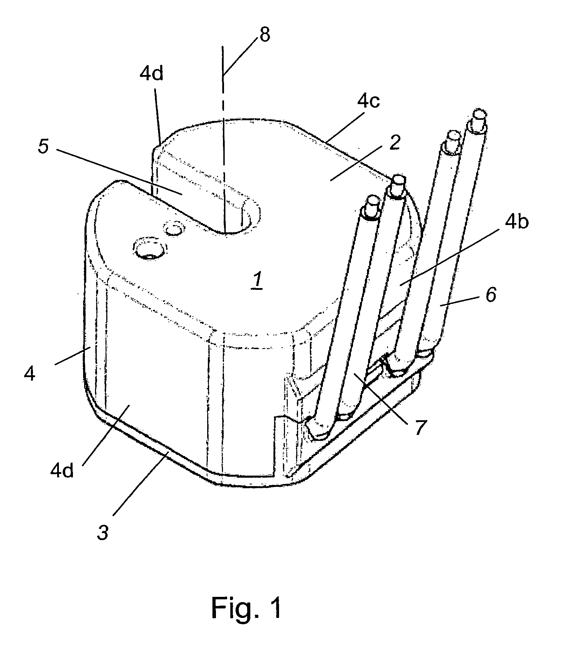

Fig. 1 ein erfindungsgemäßes Gehäuse 1 im Schrägriß;
Fig. 2 ein in eine Unterputzdose 10 eingebautes erfindungsgemäßes Gehäuse 1 im Schrägriß;
Fig. 3 ein erfindungsgemäßes Gehäuse 1, montiert an einer Leuchten-/Lusterhaltung im Schrägriß und
Fig. 4 ein in einer Deckendose 13 mit integriertem Lusterhaken 11 angeordnetes erfindungsgemäßes Gehäuse 1 im Schrägriß.

In einem erfindungsgemäßen Gehäuse 1 ist eine elektronische Schaltung, eben ein Funkbus-Gerät untergebracht. Dieses Gerät kann als Aktor ausgebildet sein, welcher zur Bedienung eines elektrischen Verbrauchers einer elektrischen Anlage dient. Der Aktor kann im einfachsten Fall aus einem elektrischen oder elektronischen Schalter (Relais, Thyristor, Triac od. dgl.) mit entsprechender Beschaltung bestehen und zum Aus- und Einschalten eines Verbrauchers, wie z.B. einer Lampe, einer Heizung, eines Jalousien-Motors od. dgl. dienen. Der Aktor kann aber auch zur Erfüllung komplexerer Steueraufgaben, beispielsweise als kontinuierlicher Drehzahlsteller oder als Dimmer ausgebildet sein. Der Aktor bzw. sein Gehäuse 1 weist ein erstes Paar 6 elektrischer Anschlüsse, an welche die Netzspannung und ein zweites Paar 7 elektrischer Anschlüsse, an welche der zu steuernde Verbraucher angeklemmt wird, auf. Das Schaltsignal wird mittel eines in den Zeichnungen nicht dargestellten Senders generiert und an den Aktor gesandt. Für den zu steuernden Verbraucher muß nicht unbedingt ein Drähtepaar vorgesehen sein, es reicht aus, eine einzelne geschaltene Leitung vorzusehen. Der Verbraucher wird dabei an diese geschaltene Leitung und an den Neutralleiter des ersten Anschlußpaares 6 angeschlossen.

Das im erfindungsgemäßen Gehäuse untergebrachte Funkbus-Gerät kann auch ein Sensor sein. An Sensoren sind Eingabegeräte wie Schalter, Taster, Licht-, Bewegungs-, Glasbruchdetektoren od. dgl. angeschlossen und dienen dazu, die von diesen Eingabegeräten erzeugten Signale in Funkbus-Signale umzuwandeln.

Die vorliegende Erfindung bezieht sich auf den konstruktiven Aufbau des Gehäuses 1. Wie aus den Zeichnungsfiguren hervorgeht, weist dieses im wesentlichen zylindrische Gestalt auf, wobei beim gezeigten Ausführungsbeispiel die Höhe des Zylinders kleiner dem Zylinderdurchmesser ist. Dieses Verhältnis ist aber nicht zwingend vorzusehen, Zylinder-Höhe und Zylinder-Durchmesser können auch gleich bzw. die Höhe größer als der Durchmesser gewählt werden. Die Deckfläche dieses Zylinders ist mit 2, seine Bodenfläche mit 3 und seine Mantelfläche mit 4 bezeichnet.

Erfmdungswesentlich ist die Ausnehmung 5, die sich von der Mantelfläche 4 des Zylinders in Richtung seiner Längssymmetrieachse 8 erstreckt. Diese Ausnehmung 5 ist über ihre gesamte Erstreckung durchgehend ausgebildet, sodaß Gegenstände, die schmäler als diese Ausnehmung 5 sind, in sie eingesetzt bzw. das Gehäuse 1 auf solche Gegenstände aufgesetzt werden kann. Tiefe und genaue Gestalt der Ausnehmung 5 sind nicht erfindungswesentlich, bevorzugt und deshalb auch so in den Zeichnungen dargestellt wird die Ausnehmung 5 bis an die Längssymmetrieachse 8 herangezogen und in Form eines Schlitzes, d.h. mit im wesentlichen ebenen Seitenflächen ausgebildet.

An dem der Ausnehmung 5 gegenüberliegenden Bereich der Mantelfläche 4 sind die oben bereits erwähnten Anschluß-Paare 6,7 aus dem Gehäuse 1 heraus geführt. Deckfläche 2 und

Bodenfläche 3 müssen nicht perfekt kreisförmig ausgebildet sein, sie können gerade Abschnitte aufweisen, wodurch der Zylindermantel 4 mit sich in Zylinderlängsrichtung erstreckenden ebenen Flächen 4a,4b,4c,4d ausgebildet ist.

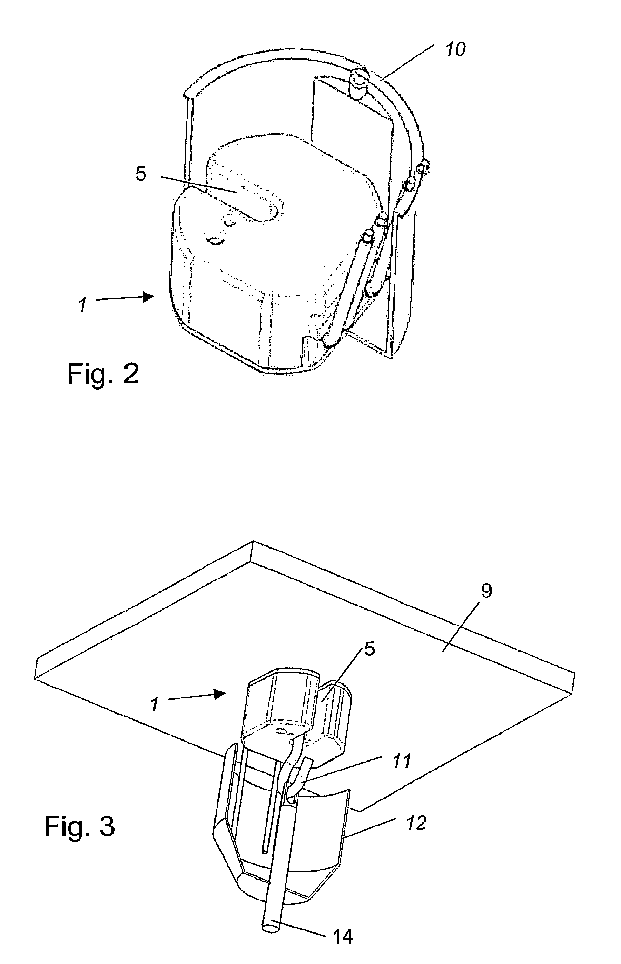

In den Fig.2-4 werden mögliche Einbau-Varianten des erfindungsgemäßen Gehäuses 1 dargestellt. In Fig.2 ist das erfindungsgemäße Gehäuse 1 im Inneren einer Unterputzdose 10 angeordnet, so wie dies auch schon für bisher bekannte Gehäuse bekannt ist. Die Anschlußdrähte 6,7 können dabei seitlich neben dem Gehäuse 1 oder durch die Ausnehmung 5 hindurch verlaufend verlegt werden.

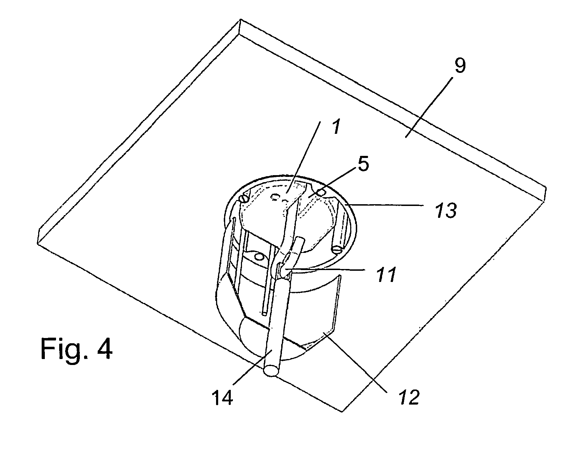

Die besonderen Vorteile der Erfindung zeigen sich in Fig.3 und 4: In beiden Darstellungen ist ein Ausschnitt aus einer (Zimmer-)Decke 9 gezeigt, an welcher ein Luster hängend befestigt werden soll. In Fig.3 ist dazu ein Lusterhaken 11 direkt in die Decke 9 geschraubt und in diesen Lusterhaken 11 ist die Stange 14 des Lusters eingehängt. Das erfindungsgemäße Gehäuse 1 ist mit seiner Ausnehmung 5 auf den Lusterhaken 11 aufgesetzt, weshalb es keinerlei zusätzlicher Befestigungsmaßnahmen für dieses Gehäuse bedarf. Das erfindungsgemäße Gehäuse 1 kann außer auf dem dargestellten Lusterhaken 11 auch auf einer Lampenstange, Lampenschnur, Lampenkette od. dgl. in derselben Weise, nämlich indem es mit seiner Ausnehmung 5 auf die genannten Gegenstände aufgesetzt wird, befestigt werden.

Gerade für diese Art der Montage des erfindungsgemäßen Gehäuses 1 ist es günstig, seine Ausnehmung 5 zumindest bereichsweise als Klemmverbinder auszubilden, d.h. den Abstand zwischen den Seitenwandungen der Ausnehmung 5 zumindest abschnittsweise so klein zu wählen, daß diese reibschlüssig am Lusterhaken 11 (bzw. der Lampenstange, Lampenschnur, Lampenkette od. dgl.) anliegen. Die ohnehin bei jedem Luster vorgesehene Lampenkappe 12 wird zur Abdeckung des Aktorgehäuses 1 verwendet. Das Anbringen des Gehäuses 1 kann nach bereits erfolgter Montage des Lusterhakens 11 bzw. des gesamten Lusters erfolgen. Wenn die Ausnehmung 5 nicht als Klemmverbinder ausgebildet ist, d.h. seine Seitenwandungen nur lose oder gar nicht am Gegenstand, an welchem das Gehäuse 1 festgelegt werden soll, anliegen, kann die Befestigung des Gehäuses 1 mittels separater

Befestigungsmittel, wie z.B. Kabelbinder erfolgen.

In Fig.4 ist in die Decke 9 eine Deckendose 13, also eine Installationsdose, die hinsichtlich Bauform und Funktion einer Unterputzdose entspricht, eingebaut. Im Zentrum dieser Deckendose 13 befindet sich wieder ein Lusterhaken 11, auf welchen das erfindungsgemäße Gehäuse 1 -ähnlich wie in Fig.3- mit seiner Ausnehmung 5 aufgesetzt ist. Die Lampenkappe 12 wird hier auf die Berandung der Deckendose 13 aufgesetzt und überdeckt damit diese sowie das in ihr befindliche Gehäuse 1.

## Patentansprüche

1. Funkbus-Gerät, beispielsweise ein Autor zur Bedienung bzw. Steuerung eines elektrischen Verbrauchers einer elektrischen Anlage, dessen Gehäuse (1) im wesentlichen zylindrische Gestalt aufweist, wobei vorzugsweise die Höhe des Zylinders kleiner oder gleich dem Zylinderdurchmesser ist, **dadurch gekennzeichnet, daß** das Gehäuse (1) mit einer sich von der Mantelfläche des Zylinders in Richtung der Längssymmetrieachse (8) des Zylinders, vorzugsweise bis zu dieser, erstreckender in Längsrichtung durchgehenden Ausnehmung (5) ausgebildet ist.

2. Funkbus-Gerät nach Anspruch 1, **dadurch gekennzeichnet, daß** die Ausnehmung (5) in Form eines Schlitzes ausgebildet ist.

3. Funkbus-Gerät nach Anspruch 1 oder 2, **dadurch gekennzeichnet, daß** die Ausnehmung (5) zumindest bereichsweise als Klemmverbinder ausgebildet ist.

4. Funkbus-Gerät nach Anspruch 1, 2. oder 3, **dadurch gekennzeichnet, daß** an dem der Ausnehmung (5) gegenüberliegenden Bereich der Zylindermantelfläche (4) elektrische Anschlüsse (6,7) herausgeführt sind.

5. Funkbus-Gerät nach einem der Ansprüche 1 bis 4, **dadurch gekennzeichnet, daß** der Zylindermantel (4) mit sich in Zylinderlängsrichtung erstreckenden ebenen Flächen ausgebildet ist.

## Claims

1. A radio bus device, e.g. an actuator for operating or controlling an electric consumer of an electric installation, whose housing (1) has a substantially cylindrical shape, with preferably the height of the cylinder being smaller than or equal to the diameter of the cylinder, **characterized in that** the housing (1) is arranged with a recess (5) which is continuous in the longitudinal direction and extends from the jacket surface of the cylinder in the direction of the longitudinal axis of symmetry (8) of the cylinder, preferably up to said axis.

2. A radio bus device according to claim 1, **characterized in that** the recess (5) is arranged in form of a slit.

3. A radio bus device according to claim 1 or 2, **characterized in that** the recess (5) is arranged at least in sections as a clamp.

4. A radio bus device according to claim 1, 2 or 3, **characterized in that** electric connections (6, 7) are guided out of the area of the cylinder jacket surface (4) which is opposite of the recess (5).

5. A radio bus device according to one of the claims 1 to 4, **characterized in that** the cylinder jacket (4) is arranged with planar surfaces extending in the longitudinal direction of the cylinder.

## Revendications

1. Appareil de bus radio, par exemple actionneur pour l'actionnement ou la commande d'un consommateur électrique dans une installation électrique, dont le boîtier (1) présente une forme sensiblement cylindrique, la hauteur du cylindre étant de préférence inférieure ou égale au diamètre du cylindre, **caractérisé en ce que** le boîtier (1) est doté d'un évidement (5) s'étendant de la surface d'enveloppe du cylindre vers l'axe de symétrie longitudinale (8) du cylindre et de préférence jusqu'à celui-ci et continu dans le sens longitudinal.

2. Appareil de bus radio selon la revendication 1, **caractérisé en ce que** l'évidement (5) est réalisé sous la forme d'une fente.

3. Appareil de bus radio selon la revendication 1 ou 2, **caractérisé en ce que** l'évidement (5) est réalisé au moins par endroits comme un élément d'assemblage par serrage.

4. Appareil de bus radio selon la revendication 1, 2 ou 3, **caractérisé en ce que** des raccords électriques (6,7) sont amenés à l'extérieur dans la partie de la surface d'enveloppe du cylindre (4) faisant face à l'évidement (5).

5. Appareil de bus radio selon l'une des revendications 1 à 4, **caractérisé en ce que** l'enveloppe du cylindre (4) est conformée avec des surfaces planes s'étendant dans le sens longitudinal du cylindre.
